# EUROPEAN PATENT APPLICATION

(11) **EP 4 593 136 A1**
(43) Date of publication of application: **30.07.2025**
(21) Application number: 24217835.8
(22) Date of filing: 05.12.2024
(51) Int. Cl.: H01M 10/04, H01M 50/167, H01M 50/186

(54) **SECONDARY BATTERY**

(30) Priority: 24.01.2024 KR 20240010599
(71) Applicant: SAMSUNG SDI CO., LTD., Yongin-si, Gyeonggi-do 17084 (KR)
(72) Inventor: Kwon, Jun Hwan, 17084 Yongin-si, Gyeonggi-do, (KR); Choi, Woo Hyuk, 17084 Yongin-si, Gyeonggi-do, (KR); Yang, Jun Ho, 17084 Yongin-si, Gyeonggi-do, (KR); Kang, Bong Geun, 17084 Yongin-si, Gyeonggi-do, (KR); Park, Hyun Suk, 17084 Yongin-si, Gyeonggi-do, (KR); Lee, Tae Yoon, 17084 Yongin-si, Gyeonggi-do, (KR); Lim, Seung Man, 17084 Yongin-si, Gyeonggi-do, (KR); Kim, Young Ho, 17084 Yongin-si, Gyeonggi-do, (KR); Kim, Joung Ku, 17084 Yongin-si, Gyeonggi-do (KR); Yu, Gwan Hyeon, 17084 Yongin-si, Gyeonggi-do (KR); Jung, Hyun Ki, 17084 Yongin-si, Gyeonggi-do (KR)
(74) Representative: Gulde & Partner

(57) **Abstract**

A secondary battery includes an electrode assembly; a can configured to accommodate the electrode assembly that includes an open upper surface and a beading part and a crimping part on a side surface of the can; a cap plate between the beading part and the crimping part of the can that is configured to close the open upper surface of the can; a first gasket between the can and an edge part of the cap plate that includes an upper end at a same height as or below an upper surface of the edge part of the cap plate; and a terminal electrically connected to the electrode assembly.

## Description

### BACKGROUND

### 1. Field

An embodiment of the present disclosure relates to a secondary battery.

### 2. Description of Related Art

Lithium-ion secondary batteries are used as power sources for hybrid vehicles or electric vehicles as well as for portable electronic devices because of their relatively high operating voltage and relatively high energy density per unit weight.

Such secondary batteries may be classified as cylindrical, prismatic, or pouch-shaped secondary batteries depending on their shape. A cylindrical secondary battery is generally assembled by inserting an electrode assembly together with an electrolyte into a can, which is formed in a cylindrical shape. A beading part is then formed in the can so that an upper part of a side surface of the can is concavely recessed inward. A cap plate and a gasket are then positioned on the beading part. The upper surface of the can is then closed by forming a crimping part bent inward together with the gasket such that an upper end of the side surface of the can covers an edge part of the cap plate. However, in the process of forming the crimping part, the gasket may be radially bent or otherwise deformed inward, which creates undesirable wrinkles in the gasket.

The information disclosed in this background section is for enhancement of understanding of the background of the present disclosure, and therefore, it may contain information that does not constitute the related art.

### SUMMARY

An embodiment of the present disclosure provides a secondary battery capable of improving the quality of a gasket when forming a crimping part.

A secondary battery according to one embodiment of the present disclosure includes an electrode assembly, a can accommodating the electrode assembly and including an open upper surface and a beading part and a crimping part on a side surface of the can, a cap plate between the beading part and the crimping part of the can, and configured to close the upper surface of the can, a first gasket between the can and an edge part of the cap plate and having an upper end located at the same height as or below an upper surface of the edge part of the cap plate, and a terminal electrically connected to the electrode assembly.

Further, an upper end of the can may be in direct contact with the upper surface of the edge part of the cap plate.

Further, an upper end of the can may be welded to the upper surface of the edge part of the cap plate.

Further, a second gasket may be between an upper end of the can and the upper surface of the edge part of the cap plate.

Further, the second gasket may be formed in an annular shape having a width in a direction parallel to the upper surface of the edge part of the cap plate.

Further, the second gasket may extend radially inward further than the upper end of the can.

Further, the first gasket and the second gasket may be separate.

Further, the first gasket may include a side section between a region between the beading part and the crimping part of the can and a side surface of the edge part of the cap plate, and a lower section between the beading part of the can and a lower surface of the edge part of the cap plate.

Further, an upper end of the side section may be located at the same height as or below the upper surface of the edge part of the cap plate.

Further, the side section and the lower section may be integral.

Further, a ratio of a height of the side section to a distance between the beading part and the crimping part of the can may be in a range from approximately 30% to approximately 60%.

Further, a ratio of a total height of the first gasket to a distance between the beading part and the crimping part of the can may be in a range from approximately 65% to approximately 95%.

Further, a ratio of a height of the side section to a total height of the first gasket may be in a range from approximately 35% to approximately 70%.

Further, the cap plate may include a step such that the upper surface of the edge part of the cap plate is below an upper surface of a center part of the cap plate.

Further, the cap plate may include a part connecting the edge part of the cap plate to the center part of the cap plate that is inclined.

Further, a portion of the upper surface of the edge part of the cap plate may be cut.

Further, the terminal may be installed in the cap plate, and the secondary battery may include an insulating member between the cap plate and the terminal.

Further, a lower surface of the can may include a notch configured to function as a safety vent.

Further, the terminal may be installed in a lower surface of the can, and the secondary battery may include an insulating member between the can and the terminal.

Further, the cap plate may include a notch configured to function as a safety vent.

### BRIEF DESCRIPTION OF DRAWINGS

FIG. 1 is a cross-sectional view of a secondary battery according to a first embodiment of the present disclosure.
FIG. 2 is an enlarged view of portion II of FIG. 1.
FIG. 3 is a cross-sectional view of a secondary battery according to a second embodiment of the present disclosure.
FIG. 4 is an enlarged view of portion IV of FIG. 3.
FIG. 5 is a cross-sectional view of a secondary battery according to a third embodiment of the present disclosure.
FIG. 6 is an enlarged view of portion VI of FIG. 5.
FIG. 7 is a cross-sectional view of a secondary battery according to a fourth embodiment of the present disclosure.
FIG. 8 is an enlarged view of portion VIII of FIG. 7.

### DETAILED DESCRIPTION

Hereinafter, exemplary embodiments of the present disclosure will be described in detail with reference to the accompanying drawings.

Embodiments of the present disclosure are provided to more fully describe the present disclosure to those skilled in the art, and the following embodiments may be modified in many different forms, and the scope of the present disclosure is not limited to the following embodiments. Rather, these embodiments are provided so that the present disclosure will be thorough and complete, and will fully convey the spirit of the present disclosure to those skilled in the art.

In addition, in the drawings below, the thickness or size of each layer is exaggerated for convenience and clarity of illustration, and like reference numerals refer to like elements in the drawings. As used in the present specification, the term "and/or" may include any and all combinations of one or more of the associated listed items. In addition, in the present specification, it is to be understood that when a member A is referred to as being "connected to" a member B, the member A may be directly connected to the member B, or a member C may be interposed between the members A and B such that the member A is indirectly connected to the member B.

The terms used herein are for the purpose of describing specific embodiments and are not intended to limit the present disclosure. As used in the present specification, a singular form may, unless definitely indicating a particular case in terms of the context, include a plural form. In addition, the terms "comprise" or "include" and/or "comprising" or "including," when used in the present specification, specify the presence of stated features, numbers, steps, operations, members, elements, and/or groups thereof, but do not preclude the presence or addition of one or more other features, numbers, steps, operations, members, elements, and/or groups thereof.

In the present specification, although the terms "first," "second," and the like may be used to describe various members, components, regions, layers, and/or parts, these members, components, regions, layers, and/or parts are not to be limited by these terms. These terms are used to distinguish one member, component, region, layer, or part from another member, component, region, layer, or part. Thus, a first member, component, region, layer, or part described below may also be a second member, component, region, layer, or part without departing from the teachings of the present disclosure.

Spatially relative terms, such as "beneath," "below," "lower," "above," and "upper," may be used herein for easy understanding of one element or feature and another element or feature as illustrated in the drawings. These spatially relative terms are intended for ease of comprehension of the present disclosure according to various process states or usage states of the present disclosure, and are not intended to limit the present disclosure. For example, when an element or feature in the drawings is turned over, the element or feature described as "below" or "lower" may be described as "above" or "upper." Thus, the term "beneath" may encompass the term "above" or "below."

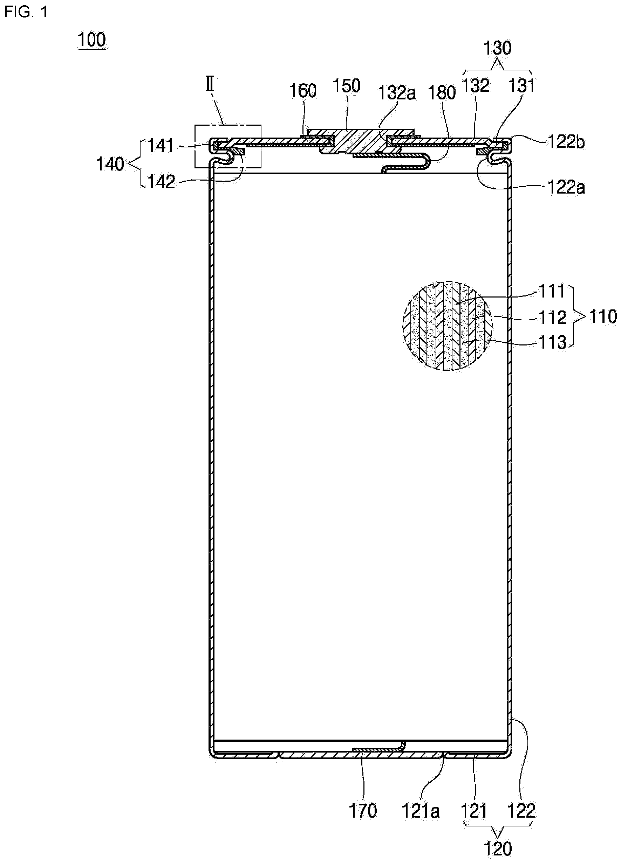

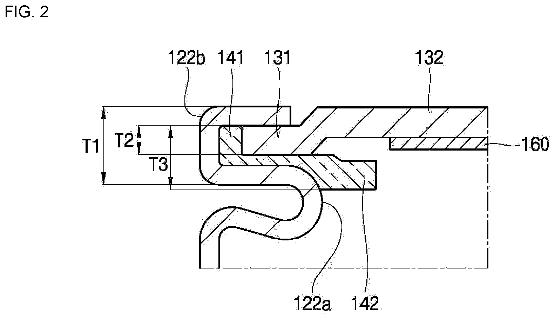

FIG. 1 is a cross-sectional view of a secondary battery 100 according to a first embodiment of the present disclosure, and FIG. 2 is an enlarged view of portion II of FIG. 1.

Referring to FIGS. 1 and 2, the secondary battery 100 according to the first embodiment of the present disclosure includes an electrode assembly 110, a can 120, a cap plate 130, a first gasket 140, a terminal 150, an insulating member 160, a first electrode lead 170, and a second electrode lead 180.

The electrode assembly 110 includes a first electrode plate 111, a second electrode plate 112, and a separator 113.

The first electrode plate 111 may be a negative electrode plate or a positive electrode plate. In an embodiment in which the first electrode plate 111 is a negative electrode plate, the first electrode plate 111 includes a base material (a negative electrode base material) having a coated part (a negative electrode coated part) that is coated with an active material (a negative electrode active material) and an uncoated part (a negative electrode uncoated part) that is not coated with a negative electrode active material. The base material may made of a conductive metal thin plate, for example, copper or nickel foil or mesh. The negative electrode active material may include, for example, a carbon-based material, Si, Sn, tin oxide, a tin alloy composite, a transition metal oxide, lithium metal nitrite, or a metal oxide.

The second electrode plate 112 may be the other of the negative electrode plate or the positive electrode plate. In an embodiment in which the second electrode plate 112 is a positive electrode plate, the second electrode plate 112 includes a base material (a positive electrode base material) having a coated part (a positive electrode coated part) that is coated with a positive electrode active material and an uncoated part (a positive electrode uncoated part) that is not coated with an active material (a positive electrode active material). The base material (a positive electrode base material) may be made of a conductive metal thin plate, for example, aluminum foil or mesh. The positive electrode active material may include a chalcogenide compound, for example, a composite metal oxide, such as LiCoO₂, LiMn₂O₄, LiNiO₂, LiNiMnO₂, or the like.

The separator 113 is between the first electrode plate 111 and the second electrode plate 112, and is configured to prevent a short circuit between the first electrode plate 111 and the second electrode plate 112. The separator 113 may be made of, for example, polyethylene, polypropylene, a porous copolymer of polyethylene and polypropylene, or the like.

The electrode assembly 110 may be formed by stacking the first electrode plate 111, the separator 113, the second electrode plate 112, and the separator 113 in that order and winding the first electrode plate 111, the separator 113, the second electrode plate 112, and the separator 113 into a so-called jelly-roll shape.

The can 120 may be formed in a cylindrical shape. In one or more embodiments, the can 120 may include a lower surface 121 formed in a disk shape and a side surface 122 extending upward from a circumference of the lower surface 121. An upper surface of the can 120 is open, and thus the electrode assembly 110 may be inserted into the can 120 together with an electrolyte through the upper surface of the can 120. The upper surface of the can 120 may be closed using the cap plate 130.

In the can 120, the lower surface 121 may be integrally formed with the side surface 122.

The can 120 may include a notch 121a configured to function as a safety vent in the lower surface 121. Thus, when a gas is generated due to abnormal operation of the secondary battery 100 and an internal pressure of the secondary battery 100 rises above a certain pressure, the pressure may cause an incision along the notch 121a to allow the notch 121a to open and discharge the gas, thereby preventing an explosion.

Further, the can 120 may include a beading part 122a and a crimping part 122b on the side surface 122. The beading part 122a is configured to fix the electrode assembly 110 in place and to seat the cap plate 130. The beading part 122a is formed by concavely recessing an upper part of the side surface 122 of the can 120 inward. The crimping part 122b is configured to fix the cap plate 130, and is formed by bending an upper end of the side surface 122 of the can 120 inward to cover an edge part 131 of the cap plate 130.

The can 120 may be made of, for example, steel, a steel alloy, aluminum, an aluminum alloy, or the like.

The cap plate 130 is coupled to the upper surface of the can 120.

In one or more embodiments, during an assembly process in which the electrode assembly 110 is accommodated in the can 120, the beading part 122a may be formed such that the upper part of the side surface 122 of the can 120 is concavely recessed inward, and then the cap plate 130 may be seated together with the first gasket 140 in the beading part 122a. The crimping part 122b may then be formed such that the upper end of the side surface 122 of the can 120 is bent inward to cover the edge part 131 of the cap plate 130, thereby installing the cap plate 130.

Furthermore, an upper end of the can 120 may be welded in direct contact with the edge part 131 of the cap plate 130. In one or more embodiments, the welding may be performed by irradiating the upper end of the can 120 with a laser from above, and the welding may be continuously performed along the edge part 131 of the cap plate 130, i.e., in a circular manner. Accordingly, a gap between the upper end of the can 120 and the edge part 131 of the cap plate 130 may be minimized or at least reduced such that the can 120 and the cap plate 130 are tightly joined together.

In addition, the cap plate 130 may include a step such that an upper surface of the edge part 131 of the cap plate 130 is below an upper surface of a center part 132 of the cap plate 130. In one or more embodiments, a part connecting the edge part 131 of the cap plate 130 to the center part 132 may be bent to be inclined (i.e., sloped) so that the edge part 131 may be located entirely below the center part 132, or the upper surface of the edge part 131 of the cap plate 130 may be partially cut so that the upper surface of the edge part 131 may be lower than the upper surface of the center part 132. The former case is illustrated in the drawings. The step may correspond (or substantially correspond) to a thickness of the can 120. Thus, when the upper end of the can 120 is bent inward to cover the edge part 131 of the cap plate 130, the upper end of the can 120 is prevented from protruding upward relative to the cap plate 130.

The cap plate 130 includes a terminal hole 132a for the terminal 150 to be installed. The terminal hole 132a may be formed through the center (or substantially the center) of the center part 132 of the cap plate 130.

The first gasket 140 is between the can 120 and the cap plate 130 and is configured to prevent the electrolyte from leaking to the outside and to prevent foreign substances such as moisture or dust from flowing into the inside of the can 120.

In one or more embodiments, the first gasket 140 includes a side section 141 between a region between the beading part 122a and the crimping part 122b of the can 120 and an outer side surface of the edge part 131 of the cap plate 130, and a lower section 142 between the beading part 122a of the can 120 and a lower surface of the edge part 131 of the cap plate 130.

The side section 141 surrounds the outer side surface of the edge part 131 of the cap plate 130. In one or more embodiments, the side section 141 may not protrude higher than the upper surface of the edge part 131 of the cap plate 130. In one or more embodiments, an upper end of the side section 141 may be located at substantially the same height as or slightly below the upper surface of the edge part 131 of the cap plate 130. In the drawings, the upper end of the side section 141 is illustrated as being located at the same height as the upper surface of the edge part 131 of the cap plate 130. Thus, when the crimping part 122b is formed, an upper end of the side surface 122 of the can 120 may be entirely in close contact with the edge part 131 of the cap plate 130 so as not to interfere with the side section 141.

In order to ensure a sealing strength for the cap plate 130, a ratio T2ΓΓ1 of a height T2 of the side section 141 to a distance T1 between the beading part 122a and the crimping part 122b of the can 120 may be in a range from approximately 30% to approximately 60%. In one or more embodiments, the distance T1 between the beading part 122a and the crimping part 122b of the can 120 may be about (approximately) 2.25 mm, and the height T2 of the side section 141 may be about (approximately) 1.00 mm such that the ratio T2/T1 is about (approximately) 44.4%.

The lower section 142 surrounds the lower surface of the edge part 131 of the cap plate 130. The lower section 142 may be slightly compressed in thickness relative to its initial thickness during the process of forming the crimping part 122b.

In order to ensure the sealing strength for the cap plate 130 while avoiding interference with other components, such as the electrode assembly 110 and/or the second electrode lead 180, a ratio T3/T1 of a total height T3 of the first gasket 140 to the distance T1 between the beading part 122a and the crimping part 122b of the can 120 may be in a range from approximately 65% to approximately 95%. In one or more embodiments, the distance T1 between the beading part 122a and the crimping part 122b of the can 120 may be about (approximately) 2.25 mm, and the total height T3 of the first gasket 140 may be about (approximately) 1.90 mm such that the ratio T3/T1 is about (approximately) 84.4%. In addition, a ratio T2/T3 of the height T2 of the side section 141 to the total height T3 of the first gasket 140 may be in a range from approximately 35% to approximately 70%. In one or more embodiments, the total height T3 of the first gasket 140 may be about (approximately) 1.90 mm and the height T2 of the side section 141 may be about (approximately) 1.00 mm such that the ratio T2/T3 is about (approximately) 52.6%.

In the first gasket 140, the side section 141 may be integrally formed with the lower section 142.

In addition, the first gasket 140 may be made of, for example, polypropylene (PP), polyethylene (PE), ethylene propylene diene monomer (EPDM), nitrile butadiene rubber (NBR), or the like.

The terminal 150 is installed in the terminal hole 132a of the cap plate 130.

The terminal 150 may be installed, for example, by riveting. In one or more embodiments, after the terminal 150 is inserted into the terminal hole 132a from above the cap plate 130, a downwardly inserted part (i.e., a lower portion) of the terminal 150 may be deformed to have a diameter greater than that of the terminal hole 132a such that the terminal 150 is supported on and fixed to a lower surface of the center part 132 of the cap plate 130. In one or more embodiments, an upper portion of the terminal 150 located above the cap plate 130 may be formed to have a diameter greater than that of the terminal hole 132a and the upper portion of the terminal 150 may be supported on the upper surface of the center part 132 of the cap plate 130. After the terminal 150 is inserted into the terminal hole 132a from below the cap plate 130, an upper portion of the terminal 150 protruding upward may be deformed to have a diameter greater than that of the terminal hole 132a such that the upper portion of the terminal 150 is supported on and fixed to the upper surface of the center part 132 of the cap plate 130. A lower side portion of the terminal 150 located below the cap plate 130 may have a diameter greater than that of the terminal hole 132a and the lower side portion of the terminal 150 may be supported on the lower surface of the center part 132 of the cap plate 130.

The insulating member 160 is between the cap plate 130 and the terminal 150, and is configured to electrically insulate the cap plate 130 and the terminal 150 from each other and prevent the electrolyte from leaking to the outside and to prevent foreign substances such as moisture or dust from flowing into the inside.

In one or more embodiments, the insulating member 160 may include a section between the upper surface of the center part 132 of the cap plate 130 and the upper side part of the terminal 150, a section between an inner circumferential surface of the terminal hole 132a of the cap plate 130 and a part connecting the upper side part and the lower side part of the terminal 150, and a section between the lower surface of the center part 132 of the cap plate 130 and the lower side part of the terminal 150. In order to further prevent other components, such as the electrode assembly 110 and/or the second electrode lead 180, from unintentionally coming into contact with the cap plate 130, the entire section of the insulating member 160 between the lower surface of the center part 132 of the cap plate 130 and the lower side part of the terminal 150 may be widely formed across the lower surface of the center part 132 of the cap plate 130.

The first electrode lead 170 is configured to electrically connect the first electrode plate 111 of the electrode assembly 110 to the can 120. In one or more embodiments, the first electrode lead 170 may have one end welded to the uncoated part of the first electrode plate 111 and the other end welded to the lower surface 121 of the can 120.

Accordingly, when the first electrode plate 111 is a negative electrode plate as described above, the can 120 functions as a negative electrode.

The second electrode lead 180 serves to electrically connect the second electrode plate 112 of the electrode assembly 110 to the terminal 150. In one or more embodiments, the second electrode lead 180 may have one end welded to the uncoated part of the second electrode plate 112 and the other end welded to the terminal 150.

Thus, when the second electrode plate 112 is a positive electrode plate as described above, the terminal 150 functions as a positive electrode.

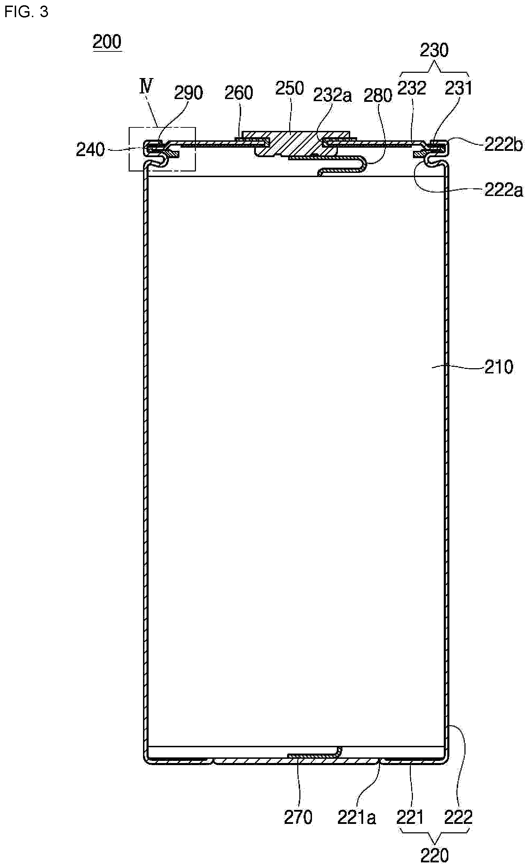

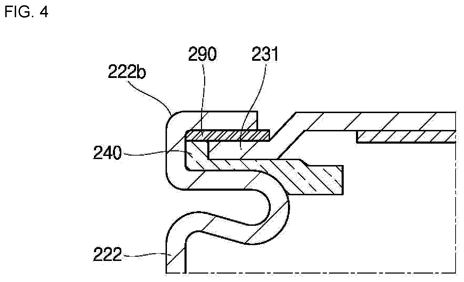

FIG. 3 is a cross-sectional view of a secondary battery 200 according to a second embodiment of the present disclosure, and FIG. 4 is an enlarged view of portion IV of FIG. 3.

Referring to FIGS. 3 and 4, the secondary battery 200 according to the second embodiment of the present disclosure includes an electrode assembly 210, a can 220, a cap plate 230, a first gasket 240, a terminal 250, an insulating member 260, a first electrode lead 270, a second electrode lead 280, and a second gasket 290.

The electrode assembly 210, the first gasket 240, the terminal 250, the insulating member 260, the first electrode lead 270, and the second electrode lead 280 of the secondary battery 200 according to the second embodiment of the present disclosure are substantially the same as the electrode assembly 110, the first gasket 140, the terminal 150, the insulating member 160, the first electrode lead 170, and the second electrode lead 180 according to the first embodiment of the present disclosure, respectively. Thus, further description of these components will be omitted and the following description will focus on the second gasket 290.

The second gasket 290 is between an upper end of a side surface 222 of the can 220 and an upper surface of an edge part 231 of the cap plate 230.

Accordingly, whereas the upper end of the side surface 122 of the can 120 is welded to the edge part 131 of the cap plate 130 in the secondary battery 100 according to the first embodiment of the present disclosure to tightly close the gap therebetween, in the secondary battery 200 according to the second embodiment of the present disclosure, a gap between the upper end of the side surface 222 of the can 220 and the edge part 231 of the cap plate 230 is filled (or substantially filled) with the second gasket 290.

The second gasket 290 is formed in an annular shape having a width in a direction substantially parallel to the upper surface of the edge part 231 of the cap plate 230. In one or more embodiments, the first gasket 240 and the second gasket 290 may be formed separately. Thus, the second gasket 290 may not be deformed to be bent radially inward when a crimping part 222b is formed (although the second gasket 290 may be somewhat compressed in thickness relative to its initial thickness), so that undesirable wrinkling and/or other deformation can be prevented or at least mitigated.

The second gasket 290 may extend radially inward further than the upper end of the side surface 222 of the can 220.

Further, the second gasket 290 may be made of, for example, polypropylene (PP), polyethylene (PE), ethylene propylene diene monomer (EPDM), nitrile butadiene rubber (NBR), or the like.

In one or more embodiments, the can 220 may be formed in a cylindrical shape. In one or more embodiments, the can 220 may include a lower surface 221 formed in a disk shape and the side surface 222 extending upward from a circumference of the lower surface 221. Because an upper surface of the can 220 is open, the electrode assembly 210 may be inserted into the can 220 together with an electrolyte through the upper surface of the can 220, and then the upper surface of the can 220 may be closed using the cap plate 230. In the can 220, the lower surface 221 may be integrally formed with the side surface 222. The can 220 may include a notch 221a configured to function as a safety vent in the lower surface 221. Thus, when a gas is generated due to abnormal operation of the secondary battery 200 and an internal pressure of the secondary battery 200 rises above a certain pressure, the pressure may cause an incision along the notch 221a to allow the notch 221a to open and discharge the gas, thereby preventing an explosion. In addition, the can 220 may include a beading part 222a and the crimping part 222b in the side surface 222. The beading part 222a is configured to fix the electrode assembly 210 and seating the cap plate 230 together, and the beading part 222a is formed by recessing an upper part of the side surface 222 of the can 220 inward. The crimping part 222b is configured to fix the cap plate 230, and is formed by bending an upper end of the side surface 222 of the can 220 inward to cover the edge part 231 of the cap plate 230 with the second gasket 290 between the edge part 231 and the crimping part 222b. The can 220 may be made of, for example, steel, a steel alloy, aluminum, an aluminum alloy, or the like.

Further, the cap plate 230 is coupled to the upper surface of the can 220. In one or more embodiments, in a manufacturing process in which the electrode assembly 210 is accommodated in the can 220, the beading part 222a may be formed such that the upper part of the side surface 222 of the can 220 is concavely recessed inward, and then the cap plate 230 may be seated together with the first gasket 240 in the beading part 222a. The crimping part 222b may then be formed such that the upper end of the side surface 222 of the can 220 is bent inward to cover the edge part 231 of the cap plate 230 with the second gasket 290 interposed therebetween, thereby installing the cap plate 230. In addition, the cap plate 230 may include a step such that an upper surface of the edge part 231 of the cap plate 230 is below an upper surface of a center part 232 of the cap plate 230. In one or more embodiments, a part connecting the edge part 231 of the cap plate 230 to the center part 232 may be bent to be inclined (i.e., sloped) so that the edge part 231 may be below the center part 232, or the upper surface of the edge part 231 of the cap plate 230 may be partially cut so that the upper surface of the edge part 231 may be formed to be lower than the upper surface of the center part 232. The former case is illustrated in the drawings. The step in the cap plate 230 may correspond (or substantially correspond) to a sum of a thickness of the can 220 and a thickness of the second gasket 290. Thus, when an upper end of the can 220 is bent inward to cover the edge part 231 of the cap plate 230 with the second gasket 290 interposed therebetween, the upper end of the can 220 is prevented from protruding upward relative to the cap plate 230. The cap plate 230 includes a terminal hole 232a for the terminal 250 to be installed. The terminal hole 232a may be formed through the center (or substantially the center) of the center part 232 of the cap plate 230.

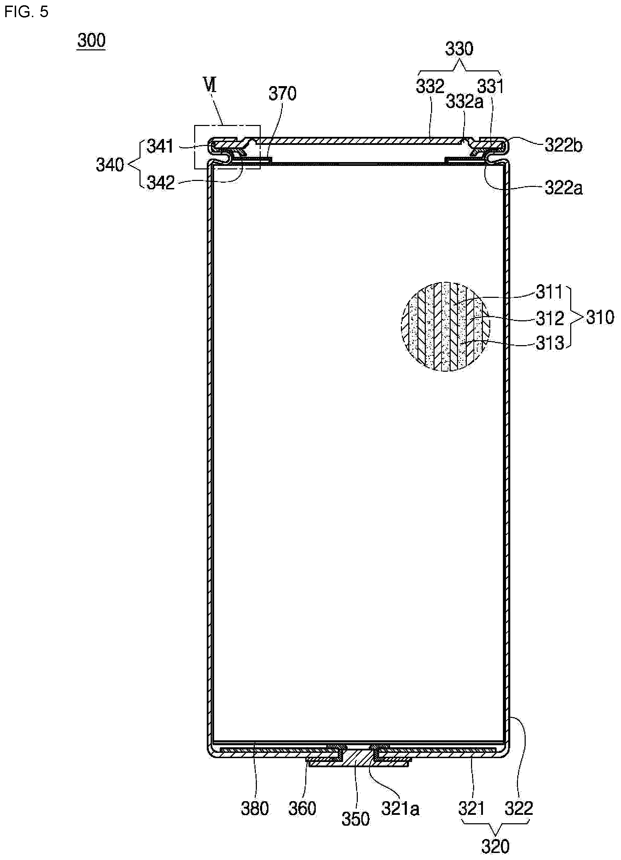

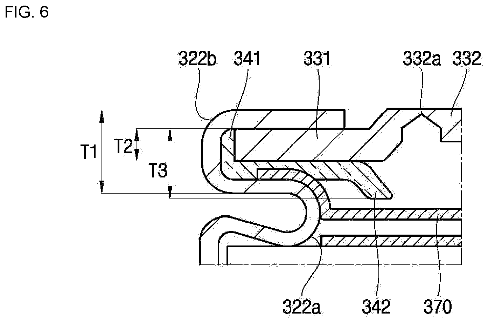

FIG. 5 is a cross-sectional view of a secondary battery 300 according to a third embodiment of the present disclosure, and FIG. 6 is an enlarged view of portion VI of FIG. 5.

Referring to FIGS. 5 and 6, the secondary battery 300 according to the third embodiment of the present disclosure includes an electrode assembly 310, a can 320, a cap plate 330, a first gasket 340, a terminal 350, an insulating member 360, a first current collecting plate 370, and a second current collecting plate 380.

The electrode assembly 310 includes a first electrode plate 311, a second electrode plate 312, and a separator 313.

The first electrode plate 311 may be a negative electrode plate or a positive electrode plate. In an embodiment in which the first electrode plate 311 is a negative electrode plate, the first electrode plate 311 includes a base material (a negative electrode base material) having a coated part (a negative electrode coated part) that is coated with an active material (a negative electrode active material) and an uncoated part (a negative electrode uncoated part) that is not coated with a negative electrode active material. The base material (a negative electrode base material) may be made of a conductive metal thin plate, for example, copper or nickel foil or mesh. The negative electrode active material may include, for example, a carbon-based material, Si, Sn, tin oxide, a tin alloy composite, a transition metal oxide, lithium metal nitrite, or a metal oxide. In addition, the negative electrode uncoated part may be along an upper end of the first electrode plate 311.

The second electrode plate 312 may be the other of the negative electrode plate or the positive electrode plate. In an embodiment in which the second electrode plate 312 is a positive electrode plate, the second electrode plate 312 includes a base material (a positive electrode base material) having a coated part (a positive electrode coated part) that is coated with a positive electrode active material and an uncoated part (a positive electrode uncoated part) that is not coated with an active material (a positive electrode active material). The base material (a positive electrode base material) may be made of a conductive metal thin plate, for example, aluminum foil or mesh. The positive electrode active material may include a chalcogenide compound, for example, a composite metal oxide, such as LiCoO₂, LiMn₂O₄, LiNiO₂, LiNiMnO₂, or the like. In addition, the positive electrode uncoated part may be along a lower end of the second electrode plate 312.

The separator 313 is between the first electrode plate 311 and the second electrode plate 312 and is configured to prevent a short circuit between the first electrode plate 311 and the second electrode plate 312. The separator 313 may be made of, for example, polyethylene, polypropylene, a porous copolymer of polyethylene and polypropylene, or the like.

The electrode assembly 310 may be formed by stacking the first electrode plate 311, the separator 313, the second electrode plate 312, and the separator 313 in that order and winding the first electrode plate 311, the separator 313, the second electrode plate 312, and the separator 313 in a so-called jelly-roll shape.

The can 320 may be formed in a cylindrical shape. In one or more embodiments, the can 320 may include a lower surface 321 formed in a disk shape and a side surface 322 extending upward from a circumference of the lower surface 321. An upper surface of the can 320 is open and the electrode assembly 310 may be inserted into the can 320 together with an electrolyte through the upper surface of the can 320. The upper surface of the can 320 may be closed using the cap plate 330.

In the can 320, the lower surface 321 may be integrally formed with the side surface 322.

The can 320 includes a terminal hole 321a for the terminal 350 to be installed in the lower surface 321. The terminal hole 321a may be formed through the center (or substantially the center) of the lower surface 321 of the can 320.

In addition, the can 320 may include a beading part 322a and a crimping part 322b in the side surface 322. The beading part 322a is configured to fix the electrode assembly 310 and seating the cap plate 330 to each other, and the beading part 322a is formed by recessing an upper part of the side surface 322 of the can 320 inward. The crimping part 322b is configured to fix the cap plate 330, and the crimping part 322b is formed by bending an upper end of the side surface 322 of the can 320 inward to cover an edge part 331 of the cap plate 330.

The can 320 may be made of, for example, steel, a steel alloy, aluminum, an aluminum alloy, or the like.

The cap plate 330 is coupled to the upper surface of the can 320.

In one or more embodiments, during a manufacturing process in which the electrode assembly 310 is accommodated in the can 320, the beading part 322a may be formed such that the upper part of the side surface 322 of the can 320 is concavely recessed inward, and then the cap plate 330 may be seated together with the first gasket 340 on the beading part 322a. The crimping part 322b may then be formed such that the upper end of the side surface 322 of the can 320 is bent inward to cover the edge part 331 of the cap plate 330, thereby installing the cap plate 330.

In one or more embodiments, an upper end of the can 320 may be welded in direct contact with the edge part 331 of the cap plate 330. In one or more embodiments, the welding may be performed by irradiating the upper end of the can 320 with a laser from above, and may be continuously performed along the edge part 331 of the cap plate 330, i.e., in a circular manner. Accordingly, a gap between the upper end of the can 320 and the edge part 331 of the cap plate 330 may be minimized or at least reduced such that can 320 and the edge part 331 of the cap plate 330 may be tightly joined.

In addition, the cap plate 330 may include a step such that an upper surface of the edge part 331 of the cap plate 330 is below an upper surface of a center part 332 of the cap plate 330. In one or more embodiments, a part connecting the edge part 331 of the cap plate 330 to the center part 332 may be bent to be inclined (i.e., sloped) so that the edge part 331 may be below the center part 332, or the upper surface of the edge part 331 of the cap plate 330 may be partially cut so that the upper surface of the edge part 331 may be formed to be lower than the upper surface of the center part 332. The former case is illustrated in the drawings. The step may correspond (or substantially correspond) to a thickness of the can 320. Thus, when the upper end of the can 320 is bent inward to cover the edge part 331 of the cap plate 330, the upper end of the can 320 is prevented from protruding upward relative to the cap plate 330.

The cap plate 330 may include a notch 332a configured to function as a safety vent at the center part 332. Thus, when a gas is generated due to abnormal operation of the secondary battery 300 and an internal pressure of the secondary battery 300 rises above a certain pressure, the pressure may cause an incision along the notch 332a to allow the notch 332a to open and discharge the gas, thereby preventing an explosion.

The first gasket 340 is between the can 320 and the cap plate 330 and is configured to prevent the electrolyte from leaking to the outside and to prevent foreign substances such as moisture or dust from flowing into the inside.

In one or more embodiments, the first gasket 340 includes a side section 341 between a region between the beading part 322a and the crimping part 322b of the can 320 and an outer side surface of the edge part 331 of the cap plate 330, and a lower section 342 between the beading part 322a of the can 320 and a lower surface of the edge part 331 of the cap plate 330.

The side section 341 surrounds the outer side surface of the edge part 331 of the cap plate 330. The side section 341 may not protrude higher than the upper surface of the edge part 331 of the cap plate 330. In one or more embodiments, an upper end of the side section 341 may be located at substantially the same height as or slightly below the upper surface of the edge part 331 of the cap plate 330. In the drawings, the upper end of the side section 341 is illustrated as being located at the same height as the upper surface of the edge part 331 of the cap plate 330. Thus, when the crimping part 322b is formed, an upper end of the side surface 322 of the can 320 may be in close contact with the edge part 331 of the cap plate 330 so as not to interfere with the side section 341 of the crimping part 322b.

In order to ensure a sealing strength for the cap plate 330, a ratio T2ΓΓ1 of a height T2 of the side section 341 to a distance T1 between the beading part 322a and the crimping part 322b of the can 320 may be in a range from approximately 30% to approximately 60%. In one or more embodiments, the distance T1 between the beading part 322a and the crimping part 322b of the can 320 may be about (approximately) 2.25 mm, and the height T2 of the side section 341 may be about (approximately) 1.00 mm such that the ratio T2/T1 is about (approximately) 44.4%.

The lower section 342 surrounds the lower surface of the edge part 331 of the cap plate 330. The lower section 342 may be slightly compressed in thickness relative to its initial thickness during the process of forming the crimping part 322b.

In order to ensure the sealing strength for the cap plate 330 while avoiding interference with other components, such as the electrode assembly 310 and/or a second electrode lead 380, a ratio T3/T1 of a total height T3 of the first gasket 340 to the distance T1 between the beading part 322a and the crimping part 322b of the can 320 may be in a range from approximately 65% to approximately 95%. In one or more embodiments, the distance T1 between the beading part 322a and the crimping part 322b of the can 320 may be about (approximately) 2.25 mm, and the total height T3 of the first gasket 340 may be about (approximately) 1.90 mm such that the ratio T3/T1 is about (approximately) 84.4%. In addition, a ratio T2/T3 of the height T2 of the side section 341 to the total height T3 of the first gasket 340 may be in a range from approximately 35% to approximately 70%. In one or more embodiments, the total height T3 of the first gasket 340 may be about (approximately) 1.90 mm and the height T2 of the side section 341 may be about (approximately) 1.00 mm such that the ratio T2/T3 is about (approximately) 52.6%.

In the first gasket 340, the side section 341 may be integrally formed with the lower section 342.

Further, the first gasket 340 may be made of, for example, polypropylene (PP), polyethylene (PE), ethylene propylene diene monomer (EPDM), nitrile butadiene rubber (NBR), or the like.

The terminal 350 is installed in the terminal hole 321a of the can 320.

The terminal 350 may be installed, for example, by riveting. In one or more embodiments, after the terminal 350 is inserted into the terminal hole 321a from below the lower surface 321 of the can 320, the inwardly inserted part (an inner portion) of the terminal 350 may be deformed to have a diameter greater than that of the terminal hole 321a such that the inner portion of the terminal 350 is supported on and fixed to an inner surface of the lower surface 321 of the can 320. An outer part of the terminal 350 located on an outer side of the lower surface 321 of the can 320 may be formed to have a diameter greater than that of the terminal hole 321a and the outer part of the terminal 350 may be supported on an outer surface of the lower surface 321 of the can 320. After the terminal 350 is inserted into the terminal hole 321a from above the lower surface 321 of the can 320, the outwardly inserted part (the outer portion) of the terminal 350 may be deformed to have a diameter greater than that of the terminal hole 321a such that the outer portion of the terminal 350 is supported on and fixed to the outer surface of the lower surface 321 of the can 320. A part (an inner portion) of the terminal 350 located on an inner side of the lower surface 321 of the can 320 may be formed to have a diameter greater than that of the terminal hole 321a such that the inner portion of the terminal 350 is supported on the inner surface of the lower surface 321 of the can 320.

The insulating member 360 is between the can 320 and the terminal 350 and is configured to electrically insulate the can 320 and the terminal 350 from each other and to prevent the electrolyte from leaking to the outside or foreign substances such as moisture or dust from flowing into the inside.

In one or more embodiments, the insulating member 360 may include a section between the outer surface of the lower surface 321 of the can 320 and the outer side part of the terminal 350, a section between an inner circumferential surface of the terminal hole 321a of the can 320 and a part connecting the outer portion and the inner portion of the terminal 350, and a section between the inner surface of the lower surface 321 of the can 320 and the inner portion of the terminal 350.

The first current collecting plate 370 serves to electrically connect the first electrode plate 311 of the electrode assembly 310 to the can 320. More specifically, the first current collecting plate 370 may have a center part welded to the uncoated part of the first electrode plate 311 of the electrode assembly 310, and an edge part thereof may be in contact with the side surface 322 of the can 320, particularly the beading part 322a.

Accordingly, in an embodiment in which the first electrode plate 311 is a negative electrode plate as described above, the can 320 functions as a negative electrode.

The second current collecting plate 380 is configured to electrically connect the second electrode plate 312 of the electrode assembly 310 to the terminal 350. In one or more embodiments, the second electrode lead 380 has one surface welded to the uncoated part of the second electrode plate 312 and the other surface welded to the inner side part of the terminal 350.

Thus, in an embodiment in which the second electrode plate 312 is a positive electrode plate as described above, the terminal 350 functions as a positive electrode.

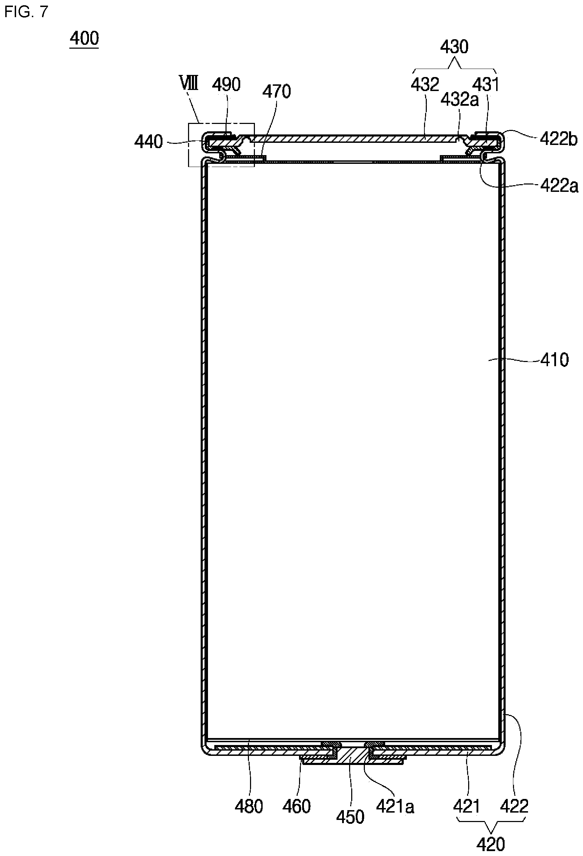

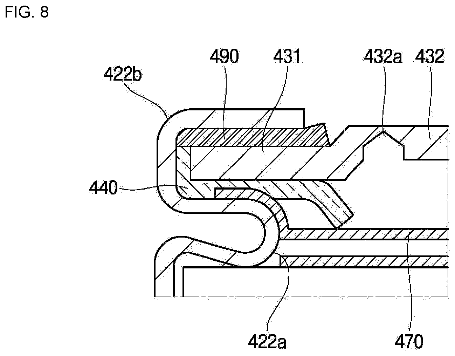

FIG. 7 is a cross-sectional view of a secondary battery 400 according to a fourth embodiment of the present disclosure, and FIG. 8 is an enlarged view of portion VIII of FIG. 7.

Referring to FIGS. 7 and 8, the secondary battery 400 according to the fourth embodiment of the present disclosure includes an electrode assembly 410, a can 420, a cap plate 430, a first gasket 440, a terminal 450, an insulating member 460, a first current collecting plate 470, a second current collecting plate 480, and a second gasket 490.

The electrode assembly 410, the first gasket 440, the terminal 450, the insulating member 460, the first current collecting plate 470, and the second current collecting plate 480 of the secondary battery 400 according to the fourth embodiment of the present disclosure are substantially the same as the electrode assembly 310, the first gasket 340, the terminal 350, the insulating member 360, the first current collecting plate 370, and the second current collecting plate 380 according to the third embodiment of the present disclosure, respectively. Thus, further description of these components will be omitted and the following description will focus on the second gasket 490.

The second gasket 490 is between an upper end of a side surface 422 of the can 420 and an upper surface of an edge part 431 of the cap plate 430.

Accordingly, whereas the upper end of the side surface 322 of the can 320 is welded to the edge part 331 of the cap plate 330 in the secondary battery 300 according to the third embodiment of the present disclosure to tightly close the gap therebetween, in the secondary battery 400 according to the fourth embodiment of the present disclosure, a gap between the upper end of the side surface 422 of the can 420 and the edge part 431 of the cap plate 430 is filled (or substantially filled) with the second gasket 490.

The second gasket 490 has an annular shape having a width in a direction substantially parallel to the upper surface of the edge part 431 of the cap plate 430. In one or more embodiments, the first gasket 440 and the second gasket 490 are formed separately. Thus, during a manufacturing process in which a crimping part 422b is formed, the second gasket 490 is not bent or deformed radially inward (although the second gasket 490 may be somewhat compressed in thickness relative to its initial thickness), so that undesirable wrinkling and/or other deformation can be prevented.

The second gasket 490 may extend radially inward further than the upper end of the side surface 422 of the can 420.

Further, the second gasket 490 may be made of, for example, polypropylene (PP), polyethylene (PE), ethylene propylene diene monomer (EPDM), nitrile butadiene rubber (NBR), or the like.

In one or more embodiments, the can 420 may be formed in a cylindrical shape. In one or more embodiments, the can 420 may include a lower surface 421 formed in a disk shape and the side surface 422 extending upward from a circumference of the lower surface 421. An upper surface of the can 420 is open, and the electrode assembly 410 may be inserted into the can 420 together with an electrolyte through the upper surface of the can 420. The upper surface of the can 420 may be closed using the cap plate 430. In the can 420, the lower surface 421 may be integrally formed with the side surface 422. The can 420 includes a terminal hole 432a for the terminal 450 to be installed in the lower surface 421. The terminal hole 432a may be formed through the center (or substantially the center) of the lower surface 421 of the can 420. In addition, the can 420 may include a beading part 422a and the crimping part 422b in the side surface 422. The beading part 422a is configured to fix the electrode assembly 410 and seating the cap plate 430 to each other and the beading part 422a may be formed by recessing an upper part of the side surface 422 of the can 420 inward. The crimping part 422b is configured to fix the cap plate 430, and the crimping part 422b may be formed by bending an upper end of the side surface 422 of the can 420 inward to cover the edge part 431 of the cap plate 430 with the second gasket 490 interposed therebetween. The can 420 may be made of, for example, steel, a steel alloy, aluminum, an aluminum alloy, or the like.

Further, the cap plate 430 is coupled to the lower surface of the can 420. In one or more embodiments, during a manufacturing process in which the electrode assembly 410 is accommodated in the can 420, the beading part 422a may be formed such that the upper part of the side surface 422 of the can 420 is concavely recessed inward. The cap plate 430 may be seated together with the first gasket 440 on the beading part 422a, and then crimping part 422b may be formed such that the upper end of the side surface 422 of the can 420 is bent inward to cover the edge part 431 of the cap plate 430 with the second gasket 490 interposed therebetween, thereby installing the cap plate 430. In addition, the cap plate 430 may include a step such that an upper surface of the edge part 431 of the cap plate 430 is below an upper surface of a center part 432 of the cap plate 430. In one or more embodiments, a part connecting the edge part 431 of the cap plate 430 to the center part 432 may be bent to be inclined (i.e., sloped) so that the edge part 431 may be below the center part 432, or the upper surface of the edge part 431 of the cap plate 430 may be partially cut so that the upper surface of the edge part 431 may be formed to be lower than the upper surface of the center part 432. The former case is illustrated in the drawings. The step in the cap plate 430 may correspond (or substantially correspond) to a sum of a thickness of the can 420 and a thickness of the second gasket 490. Thus, during a manufacturing process in which an upper end of the can 420 is bent inward to cover the edge part 431 of the cap plate 430 with the second gasket 490 interposed therebetween, the upper end of the can 420 is prevented from protruding upward relative to the cap plate 430. The cap plate 430 may include a notch 421a configured to function as a safety vent at the center part 432. Thus, when a gas is generated due to abnormal operation of the secondary battery 400 and an internal pressure of the secondary battery 400 rises above a certain pressure, the pressure may cause an incision along the notch 421a to allow the notch 421a to open and discharge the gas, thereby preventing an explosion.

An embodiment of the present disclosure can provide a secondary battery configured to prevent a gasket from being bent radially inward or otherwise deformed inward when a crimping part is formed in a can, thereby solving the problem of undesirable wrinkles conventionally occurring due to the gasket being deformed along with the can.

The above description is only some embodiments for implementing the secondary battery according to the present disclosure, and the present disclosure is not limited to the above-described embodiments. As claimed in the following claims, the technical spirit of the present disclosure includes the scope in which various changes can be made by anyone skilled in the art without departing from the gist of the present disclosure.

## Claims

1. A secondary battery (100, 200, 300, 400) comprising:
an electrode assembly (110, 210, 310, 410);
a can (120, 220, 320, 420) configured to accommodate the electrode assembly (110, 210, 310, 410), the can (120, 220, 320, 420) comprising an open upper surface and a beading part (122a, 222a, 322a, 422a) and a crimping part (122b, 222b, 322b, 422b) on a side surface (122, 222, 322, 422) of the can (120, 220, 320, 420);
a cap plate (130, 230, 330, 430) between the beading part (122a, 222a, 322a, 422a) and the crimping part (122b, 222b, 322b, 422b) of the can (120, 220, 320, 420), the cap plate (130, 230, 330, 430) being configured to close the open upper surface of the can (120, 220, 320, 420);
a first gasket (140, 240, 340, 440) between the can (120, 220, 320, 420) and an edge part (131, 231, 331, 431) of the cap plate (130, 230, 330, 430), the first gasket (140, 240, 340, 440) comprising an upper end at a same height as or below an upper surface of the edge part (131, 231, 331, 431) of the cap plate (130, 230, 330, 430); and
a terminal (150, 250, 350, 450) electrically connected to the electrode assembly (110, 210, 310, 410).

2. The secondary battery (100, 200, 300, 400) of claim 1, wherein an upper end of the can (120, 220, 320, 420) is in direct contact with the upper surface of the edge part (131, 231, 331, 431) of the cap plate (130, 230, 330, 430).

3. The secondary battery (100, 200, 300, 400) of claim 1 or 2, wherein an upper end of the can (120, 220, 320, 420) is welded to the upper surface of the edge part (131, 231, 331, 431) of the cap plate (130, 230, 330, 430).

4. The secondary battery (100, 200, 300, 400) of claim 1, further comprising a second gasket (290, 490) between an upper end of the can (120, 220, 320, 420) and the upper surface of the edge part (131, 231, 331, 431) of the cap plate (130, 230, 330, 430).

5. The secondary battery (100, 200, 300, 400) of claim 4, wherein the second gasket (290, 490) comprises an annular shape having a width in a direction parallel to the upper surface of the edge part (131, 231, 331, 431) of the cap plate (130, 230, 330, 430).

6. The secondary battery (100, 200, 300, 400) of claim 4, wherein the second gasket (290, 490) extends radially inward further than the upper end of the can (120, 220, 320, 420).

7. The secondary battery (100, 200, 300, 400) of claim 4, wherein the first gasket (140, 240, 340, 440) and the second gasket (290, 490) are separate.

8. The secondary battery (100, 200, 300, 400) of claims 1 to 7, wherein the first gasket (140, 240, 340, 440) comprises:
a side section (141, 341) between a region between the beading part (122a, 222a, 322a, 422a) and the crimping part (122b, 222b, 322b, 422b) of the can (120, 220, 320, 420) and an outer side surface (122, 222, 322, 422) of the edge part (131, 231, 331, 431) of the cap plate (130, 230, 330, 430); and
a lower section (142, 342) between the beading part (122a, 222a, 322a, 422a) of the can (120, 220, 320, 420) and a lower surface (121, 221, 321, 421) of the edge part (131, 231, 331, 431) of the cap plate (130, 230, 330, 430).

9. The secondary battery (100, 200, 300, 400) of claims 1 to 8, wherein the cap plate (130, 230, 330, 430) further comprises a step such that the upper surface of the edge part (131, 231, 331, 431) of the cap plate (130, 230, 330, 430) is below an upper surface of a center part (132, 232, 332, 432) of the cap plate (130, 230, 330, 430).

10. The secondary battery (100, 200, 300, 400) of claim 9, further comprising a part connecting the edge part (131, 231, 331, 431) of the cap plate (130, 230, 330, 430) to the center part (132, 232, 332, 432) of the cap plate (130, 230, 330, 430), the part being inclined.

11. The secondary battery (100, 200, 300, 400) of claim 9, wherein a portion of the upper surface of the edge part (131, 231, 331, 431) of the cap plate (130, 230, 330, 430) is cut.

12. The secondary battery (100, 200, 300, 400) of claims 1 to 11, wherein:
the terminal (150, 250, 350, 450) is in the cap plate (130, 230, 330, 430), and
the secondary battery (100, 200, 300, 400) further comprises an insulating member (160, 260, 360, 460) between the cap plate (130, 230, 330, 430) and the terminal (150, 250, 350, 450).

13. The secondary battery (100, 200, 300, 400) of claim 12, wherein a lower surface (121, 221, 321, 421) of the can (120, 220, 320, 420) comprises a notch (121a, 221a, 332a, 421a) configured to function as a safety vent.

14. The secondary battery (100, 200, 300, 400) of claims 1 to 13, wherein:
the terminal (150, 250, 350, 450) is in a lower surface (121, 221, 321, 421) of the can (120, 220, 320, 420), and
the secondary battery (100, 200, 300, 400) comprises an insulating member (160, 260, 360, 460) between the can (120, 220, 320, 420) and the terminal (150, 250, 350, 450).

15. The secondary battery (100, 200, 300, 400) of claim 14, wherein the cap plate (130, 230, 330, 430) further comprises a notch (121a, 221a, 332a, 421a) configured to function as a safety vent.
